# EUROPEAN PATENT APPLICATION

(11) **EP 3 043 516 A1**
(43) Date of publication of application: **13.07.2016**
(21) Application number: 16150544.1
(22) Date of filing: 08.01.2016
(51) Int. Cl.: H04L 12/28, H04L 29/08

(54) **NETWORK SYSTEM AND CONTROL METHOD THEREOF**

(30) Priority: 12.01.2015 KR 20150004278
(71) Applicant: LG Electronics Inc., Seoul 07336 (KR)
(72) Inventor: KIM, Hwantae, Seoul 08592 (KR); CHOI, Wonchul, Seoul 08592 (KR); HAN, Minhong, Seoul 08592 (KR)
(74) Representative: Ter Meer Steinmeister & Partner

(57) **Abstract**

Provided are a network system and a control method thereof. The network system according to the embodiment includes a first electric appliance (26) having a memory unit (120) and a second electric appliance (15) configured to communicate with the first electric appliance (26), in which the second electric appliance (15) includes a first memory unit (220) in which software for monitoring an operation of the second electric appliance (15) is stored and a second memory unit (230) in which software for managing operation information of the first electric appliance (26) delivered from the first electric appliance (26) is installed.

## Description

### BACKGROUND

### 1. Field

A network system and a control method thereof are disclosed herein.

### 2. Background

Generally, home appliances include washing machines, refrigerators, kitchen electrics, and vacuum cleaners.

Recently, along with the development of communication technology, a plurality of home appliances are communicably connected to one another and configured to use Internet of Things technology to process information regarding functions of the appliances for themselves.

In particular, the plurality of home appliances may transmit and receive information through machine-to-machine (M2M) communication. As an example, information regarding any one device may be transmitted to another device, and operation information of any one device may be checked through another device. Also, an operation of any one device may be controlled through another device.

A user may use a predetermined terminal to remotely monitor operation states of a plurality of home appliances connected to a network and control operations of the plurality of home appliances. As a network system of such home appliances is implemented, a smart home capable of a convenient life may be established by adding IT technology to a residential environment.

The applicant of this application carried out the conventional application (hereinafter referred to as the related art) in association with the smart home technology.
1. Application number of the related art (application date): KR 10-2003-0093196 (December 18, 2003)
2. Title of the invention: METHOD FOR CONTROLLING OF SMART WASHER USING THE HOME NETWORK

According to the related art, home appliances with high performance and comparatively high price are equipped with a memory in which a variety of software for communication is implemented, and thus the smart home technology is facilitated. As an example, such home appliances include washing machines, refrigerators, air conditioners, and robot vacuum cleaners.

On the other hand, home appliances with low performance and comparatively low price, that is, small home appliances, have limitations in being equipped with a memory in which the variety of software is implemented. As an example, the small home appliances may include coffee makers, electrical outlets, light bulbs, driers, and mixers.

Accordingly, in the related art, there are limitations in incorporating the small home appliances into the home network to monitor the operation information of the small home appliances and control the operations of the small home appliances.

### SUMMARY

The present invention is directed to providing a network system with an improved convenience of use and a control method thereof.

One aspect of the present invention provides a network system including a first electric appliance having a memory unit; and a second electric appliance configured to communicate with the first electric appliance, in which the second electric appliance includes a first memory unit in which software for monitoring an operation of the second electric appliance is stored; and a second memory unit in which software for managing operation information of the first electric appliance delivered from the first electric appliance is installed.

When the first electric appliance and the second electric appliance are communicably connected to each other, the operation information of the first electric appliance may be restricted from being stored in the memory unit and may be stored in the second memory unit.

The memory unit of the first electric appliance may include a first memory region in which software for controlling an operation of the first electric appliance and monitoring a state of the operation is stored; a second memory region in which software for performing a networking function of accessing the second electric appliance is stored; and a third memory region in which software for performing a function of delivering the operation information of the first electric appliance to the second electric appliance is stored.

The first memory unit may include a first memory region in which software for controlling an operation of the second electric appliance and monitoring a state of the operation is stored; a second memory region in which software for performing a networking function of accessing the second memory unit is stored; and a third memory region in which software for performing a function of delivering operation information of the second electric appliance to the second memory unit is stored.

The second memory unit may include a fourth memory region in which software for storing or managing data delivered from the memory unit of the first electric appliance or the first memory unit is stored.

The second memory unit may further include a fifth memory region in which software for performing a communication connection with the memory unit of the first electric appliance or the first memory unit is stored; and a sixth memory region in which software for setting a route for delivering a message between the memory unit of the first electric appliance and the first memory unit is stored.

The second electric appliance may be provided in a plurality, and the plurality of second electric appliances may perform machine-to-machine (M2M) communication.

The plurality of second electric appliances may form an arrangement of mesh topology in which the plurality of second electric appliances are individually and communicably connected.

The second memory unit may include a seventh memory region in which software for performing a function of processing protocol messages for communication with the plurality of second electric appliances is stored.

The network system may further include a mobile device configured to monitor the operation information of the first electric appliance or transmit a control command for operating the first electric appliance.

The control command of the mobile device may be transmitted to the second electric appliance, and the second electric appliance may transmit a message corresponding to the control command to the first electric appliance.

The first electric appliance may perform an operation corresponding to the message, sense a change in state caused by performing the operation, and transmit an update message for the changed state information to the second electric appliance, and the second electric appliance may transmit, to the mobile device, a response to a result of performing the control command and the update message of the first electric appliance.

The mobile device may request the operation information of the first electric appliance from the second electric appliance, and the second electric appliance may transmit the operation information of the first electric appliance stored in the second memory unit of the second electric appliance to the mobile terminal as a response.

The first electric appliance may be provided in a plurality, and the plurality of first electric appliances may be communicably connected to a communication module of the second electric appliance.

The first electric appliance may include an electric kettle, an outlet device, an illustration device, a hair dryer, and a mixer.

The second electric appliance may include a washing machine, a refrigerator, an air conditioner, a cooking device, a television, and a robot vacuum cleaner.

Another aspect of the present invention provides a control method of a network system, the control method including: communicably connecting a first electric appliance having a memory unit with a second electric appliance having a first memory unit and a second memory unit; transmitting a message for requesting state information of the first electric appliance or a control command of the first electric appliance from a mobile device while the first and second electric appliances are communicably connected; and transmitting a state information response message of the first electric appliance or a control result message of the first electric appliance from the second electric appliance to the mobile device.

The control method of claim 17, wherein the second electric appliance may be provided in a plurality, and the communicably connecting of the first and second electric appliances may include transmitting a communication access request message from the first electric appliance to the plurality of second electric appliances; transmitting response messages including communication access information from the plurality of second electric appliances; and communicably connecting the first electric appliance with a second electric appliance that transmits an earliest arriving response message.

The control method may further include: requesting, by the mobile device, the operation information of the first electric appliance from the second electric appliance; and transmitting, by the second electric appliance, the operation information of the first electric appliance stored in the second memory unit to the mobile terminal as a response.

The first electric appliance may be a small home appliance.

The plurality of second electric appliances form a machine-to-machine (M2M) communication network.

### BRIEF DESCRIPTION OF THE DRAWINGS

Embodiments will be described in detail with reference to the following drawings in which like reference numerals refer to like elements, and wherein:
FIG. 1 is a diagram showing a configuration of a network system according to a first embodiment of the present invention;
FIG. 2 is a block diagram showing the configuration of the network system according to the first embodiment of the present invention;
FIG. 3 is a block diagram showing a configuration of a first communication module according to the first embodiment of the present invention;
FIG. 4 is a block diagram showing a configuration of a second communication module according to the first embodiment of the present invention;
FIG. 5 is a flowchart showing establishment of communication between a first electric appliance and a second electric appliance according to the first embodiment of the present invention;
FIG. 6 is a flowchart showing a control method among the first electric appliance, the second electric appliance, and a mobile device according to the first embodiment of the present invention; and
FIG. 7 is a block diagram showing a configuration of a network system according to a second embodiment of the present invention.

### DETAILED DESCRIPTION

Hereinafter, embodiments of the present invention will be described in detail with reference to the accompanying drawings. In adding reference numerals for elements in each figure, it should be noted that like reference numerals are used to denote like elements in other figures wherever possible. Moreover, detailed descriptions related to well-known functions or configurations will be ruled out in order not to unnecessarily obscure subject matters of the present invention.

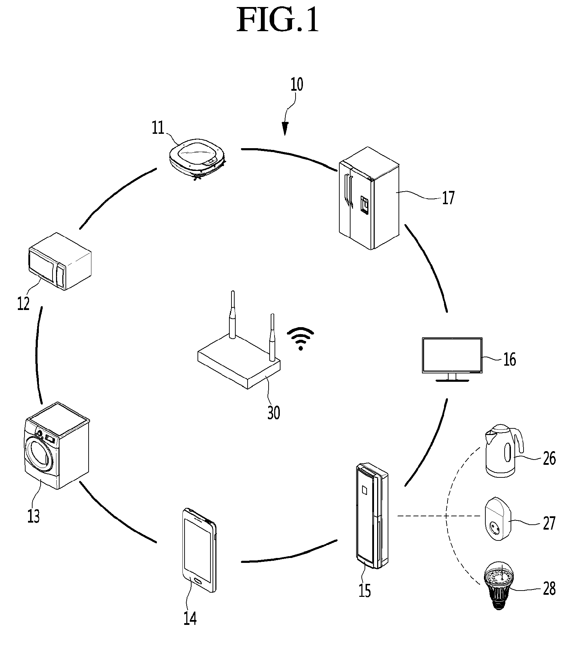

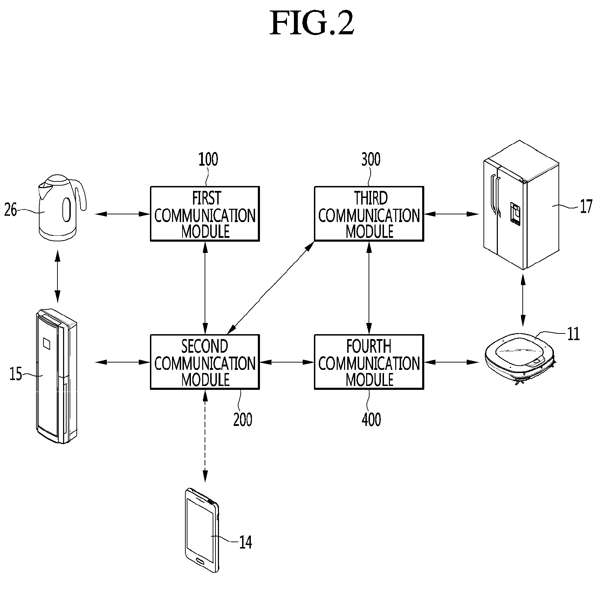

FIG. 1 is a diagram showing a configuration of a network system according to a first embodiment of the present invention, and FIG. 2 is a block diagram showing the configuration of the network system according to the first embodiment of the present invention.

Referring to FIGS. 1 and 2, a network system 10 according to the first embodiment of the present invention includes a plurality of electric appliances 11, 12, 13, 14, 15, 16, 17, 26, 27, and 28 that are communicably connected with each other.

In detail, the plurality of electric appliances 11, 12, 13, 14, 15, 16, 17, 26, 27, and 28 include first electric appliances 26, 27, and 28 having relatively low performance and second electric appliances 11, 12, 13, 14, 15, 16, and 17 having relatively high performance. The performance may include a capacity of a memory device capable of storing predetermined information.

The first electric appliances 26, 27, and 28 may be referred to as small home appliances. As an example, the first electric appliances 26, 27, and 28 may include an electric kettle 26, an outlet device 27, and an illumination device 28. However, the first electric appliances 26, 27, and 28 are not limited thereto and may include a hair dryer and a mixer. The first electric appliances 26, 27, and 28 are cheap functional products, and thus have limitations in increasing performance (memory capacity) over a predetermined value.

The second electric appliances 11, 12, 13, 14, 15, 16, and 17 are expensive functional products, and thus may increase the performance (memory capacity) over the predetermined value. As an example, the second electric appliances 11, 12, 13, 14, 15, 16, and 17 may include a robot vacuum cleaner 11, a cooking device 12, a washing machine 13, a mobile device 14, an air conditioner 15, a television 16, and a refrigerator 17.

A plurality of second electric appliances 11, 12, 13, 14, 15, 16, and 17 may form a network through machine-to-machine (M2M) communication and may communicate with each other by wire or wirelessly.

As an example, the plurality of second electric appliances 11, 12, 13, 14, 15, 16, and 17 may be communicably connected via a router over a WiFi connection. However, the communication method is not limited thereto. As long as the plurality of second electric appliances 11, 12, 13, 14, 15, 16, and 17 may form a network, another communication method, that is, Bluetooth, Ad-hoc, or Zigbee may be used.

The first electric appliances 26, 27, and 28 may be incorporated into the network system 10 by accessing any one second electric appliance among the plurality of second electric appliances 11, 12, 13, 14, 15, 16, and 17.

State information or operation information of the first electric appliances 26, 27, and 28 may be transmitted to the accessed second electric appliance, and an external apparatus may monitor or control the first electric appliances 26, 27, and 28 through the accessed second electric appliance. The external apparatus includes the remaining second electric appliances other than the accessed second electric appliance among the plurality of second electric appliances 11, 12, 13, 14, 15, 16, and 17.

Referring to FIG. 2, the network system 10 according to the first embodiment of the present invention includes the first electric appliance 26 and a first communication module 100 configured to transmit the state information or operation information of the first electric alliance 26 to the outside. FIG. 2 shows an electric kettle as an example of the first electric appliance 26. The first communication module 100 may be built-in to the first electric appliance 26 or removably provided in the outside.

The network system 10 includes any one second electric appliance 15 and a second communication module 200 provided to communicate with the first communication module 100 and receive the state information or operation information of the first electric appliance 26. FIG. 2 shows the air conditioner 15 as an example of the second electric appliance 15, but is not limited thereto. The second communication module 200 may be built-in to the second electric appliance 15 or removably provided in the outside, and may store the state information or operation information of the second electric appliance 15.

The network system 10 include another second electric appliance 17 and a third communication module 300 provided to communicate with the second communication module 200. FIG. 2 shows the refrigerator 17 as an example of the second electric appliance 17, but is not limited thereto. The third communication module 300 may be built-in to the second electric appliance 17 or removably provided in the outside, and may store the state information or operation information of the second electric appliance 17.

The second communication module 200 and the third communication module 300 may have the same configuration. Through the communication between the second communication module 200 and the third communication module 300, the state information or operation information of the second electric appliance 15 may be transmitted to the second electric appliance 17, and the state information or operation information of the second electric appliance 17 may be transmitted to the second electric appliance 15.

The network system 10 includes still another second electric appliance 11 and a fourth communication module 400 provided to communicate with the second communication module 200 and the third communication module 300. FIG. 2 shows the robot vacuum cleaner 11 as an example of the second electric appliance 11, but is not limited thereto. The fourth communication module 400 may be built-in to the second electric appliance 11 or removably provided in the outside, and may store the state information or operation information of the second electric appliance 11.

The fourth communication module 400 may have the same configuration as the second communication module 200 and the third communication module 300. Through the communication among the second communication module 200, the third communication module 300, and the fourth communication module 400, the state information or operation information of the second electric appliance 11 may be transmitted to the second electric appliance 15 or 17, and the state information or operation information of the second electric appliance 15 or 17 may be transmitted to the second electric appliance 11.

According to the above-described configuration, the network system 10 may form an arrangement of mesh topology in which the plurality of second electric appliances 11, 15, and 17 are individually and communicably connected.

The network system 10 may further include the mobile device 14 operable by a user to check the state information or operation information of the first electric appliance 26 and control an operation of the first electric appliance 26. The mobile device 14 may include a smartphone configured to execute an application.

When the application is executed, the mobile device 14 may access the second communication module 200 and may monitor the state information or operation information of the first electric appliance 26 stored in the second communication module 200.

The user may use the mobile device 14 to transmit a control command for operating the first electric appliance 26 to the second communication module 200, and the second communication module 200 may transmit a message corresponding to the control commend to the first communication module 100.

Detailed configurations of the first communication module and the second communication module will be described below with reference to the following drawings.

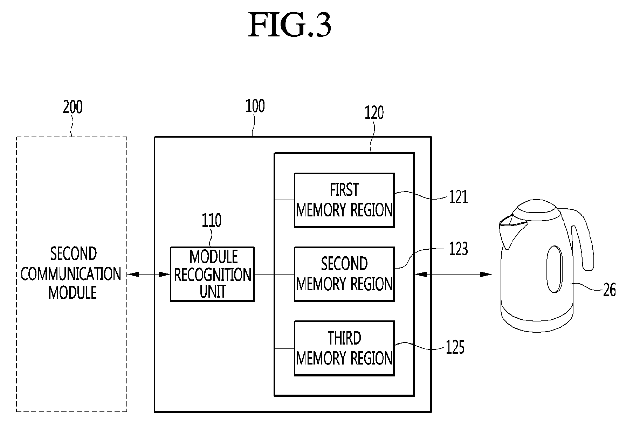

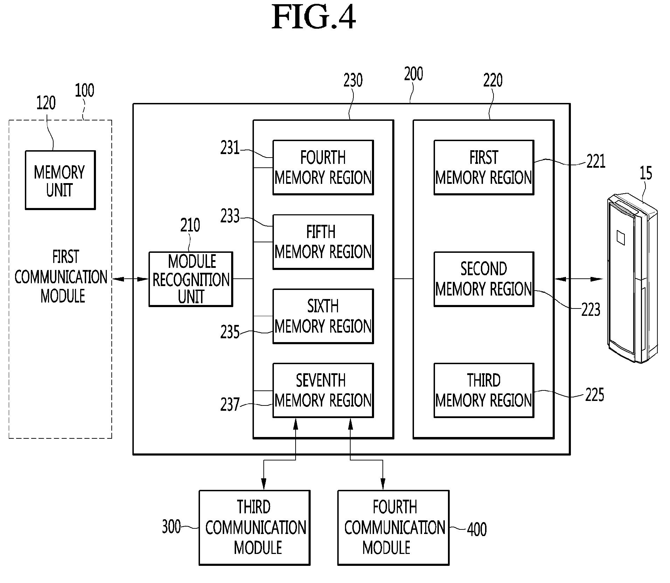

FIG. 3 is a block diagram showing a configuration of the first communication module according to the first embodiment of the present invention, and FIG. 4 is a block diagram showing a configuration of the second communication module according to the first embodiment of the present invention.

Referring to FIG. 3, the first communication module 100 according to the first embodiment of the present invention includes a module recognition unit 110 configured to recognize the second communication module 200. As an example, the module recognition unit 110 may include a modem or an antenna.

The first communication module 100 further includes a memory unit 120 configured to store information regarding the first electric appliance 26. The memory unit 120 includes a plurality of memory regions 121, 123, and 125 in which a variety of software performing different functions is stored.

The plurality of memory regions 121, 123, and 125 include a first memory region 121 in which software that performs a function of controlling the operation of the first electric appliance 26 and monitoring the operation state of the first electric appliance 26 is stored, a second memory region 123 in which software that performs a networking function of accessing the second electric appliance 15 is stored, and a third memory region 125 in which software that performs a function of delivering the operation information of the first electric appliance 26 to the second electric appliance 15 is stored.

The software stored in the first memory region 121 may be referred to as a "device manager," the software stored in the second memory region 123 may be referred to as a "first connection manager," and the software stored in the third memory region 125 may be referred to as a "provisioning manager."

While the first electric appliance 26 is driven, the device manager may control the operation of the first electric appliance 26. The first connection manager may search the network system 10 for a second electric appliance that may be connected with the first electric appliance 26 and access the second electric appliance. When the access to the second electric appliance is completed, the provisioning manager may transmit the operation information of the first electric appliance 26 to the second electric appliance 15.

The module recognition unit 110 and the memory unit 120 may be integrated on one chip or provided separately.

Referring to FIG. 4, the second communication module 200 according to the first embodiment of the present invention includes a module recognition unit 210 configured to recognize the first communication module 100. As an example, the module recognition unit 210 may include a modem or an antenna. For convenience of description, the module recognition unit 110 may be referred to as a "first module recognition unit," and the module recognition unit 210 may be referred to as a "second module recognition unit."

The second communication module 200 may further include a first memory unit 220 configured to store information regarding the second electric appliance 15 and a second memory unit 230 communicably connected with the first electric appliance 26 or configured to manage data delivered from the first electric appliance 26.

The first memory unit 220 includes a plurality of memory regions 221, 223, and 225 in which a variety of software performing different functions is stored.

The plurality of memory regions 221, 223, and 225 include a first memory region 221 in which software that performs a function of controlling the operation of the second electric appliance 15 and monitoring the operation state of the second electric appliance 15 is stored, a second memory region 223 in which software that performs a networking function of accessing the second memory unit 230 to be described below is stored, and a third memory region 225 in which software that performs a function of delivering the operation information of the second electric appliance 15 to the second memory unit 230 is stored.

The software stored in the first memory region 221 may be referred to as a "device manager," the software stored in the second memory region 223 may be referred to as a "first connection manager," and the software stored in the third memory region 225 may be referred to as a "provisioning manager."

The second memory unit 230 includes a plurality of memory regions 231, 233, 235, and 237 in which a variety of software performing different functions is stored.

The plurality of memory regions 231, 233, 235, and 237 include a fourth memory region 231 in which software that stores or manages data delivered from the memory unit 120 of the first electric appliance 26 or the first memory unit 220 is stored and a fifth memory region 233 in which software that performs a communication connection with the memory unit 120 of the first electric appliance 26 or the first memory unit 220 is stored.

The plurality of memory regions 231, 233, 235, and 237 further include a sixth memory region 235 in which software that sets a route for delivering a message between the memory unit 120 of the first electric appliance 26 and the first memory unit 220. It will be appreciated that the software stored in the sixth memory region 235 may set a route for delivering a message between communication modules 200, 300, and 400 of the plurality of second electric appliances 11, 15, and 17.

The plurality of memory regions 231, 233, 235, and 237 further include a seventh memory region 237 in which software that performs a function of communicating with a plurality of second electric appliances 11 and 17, that is, a function of processing protocol messages for communication with the third communication module 300 and the fourth communication module 400 is stored. That is, a plurality of M2M communication protocols may be used by the software stored in the seventh memory region 237.

The software stored in the fourth memory region 231 may be referred to as a "data manager," the software stored in the fifth memory region 233 may be referred to as a "second connection manager," the software stored in the sixth memory region 235 may be referred to as a "routing manager," and the software stored in the seventh memory region 237 may be referred to as a "protocol manager."

The module recognition unit 210 and the first and second memory units 220 and 230 may be integrated on one chip or provided separately.

As such, the second electric appliance 15 includes both of the first and second memory units 220 and 230 and has high performance, thereby facilitating communication with the plurality of electric appliances. On the other hand, the first electric appliance 26 includes only the memory unit 120 and has relatively low performance, and thus has difficulty smoothly communicating with the plurality of electric appliances. Accordingly, according to the embodiment, the first electric appliance 26 may be communicably connected to only one second electric appliance 15 among the plurality of electric appliances and networked.

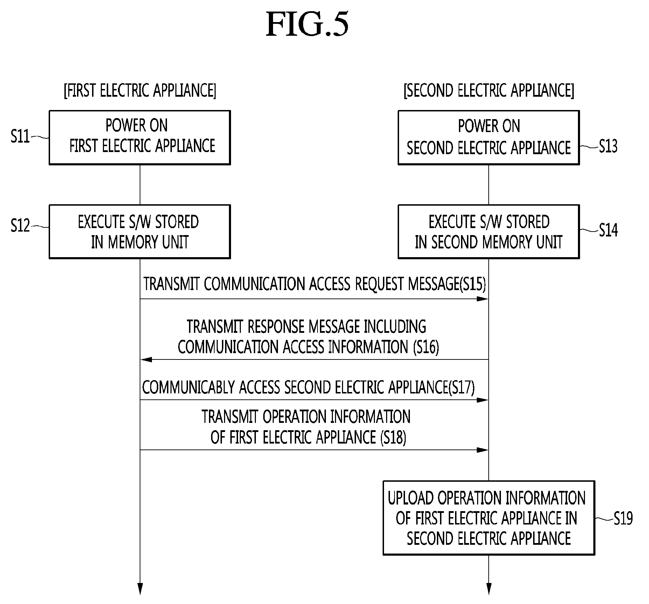

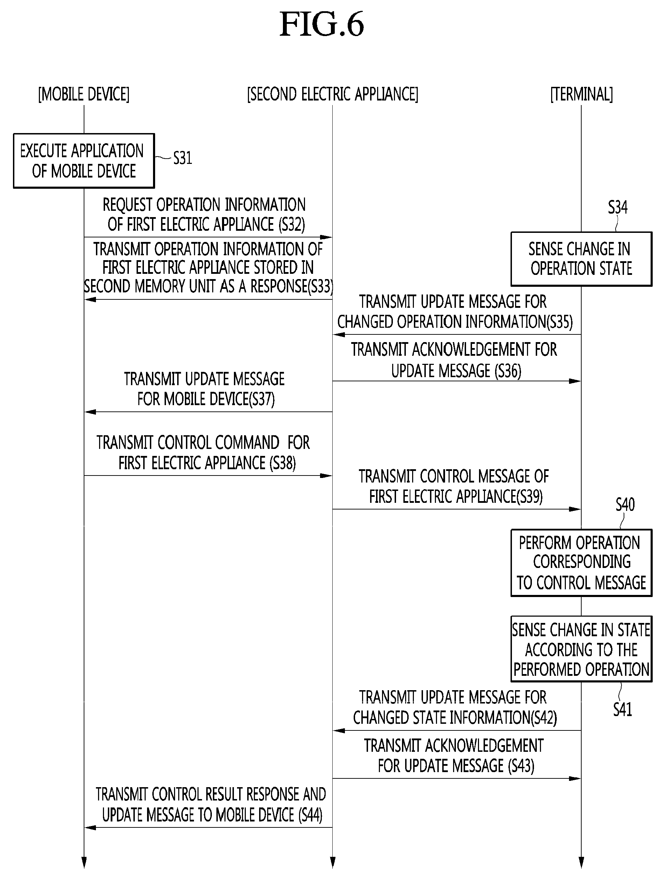

FIG. 5 is a flowchart showing establishment of communication between the first electric appliance and the second electric appliance according to the first embodiment of the present invention, and FIG. 6 is a flowchart showing a control method among the first electric appliance, the second electric appliance, and a mobile device according to the first embodiment of the present invention.

First, referring to FIG. 5, the first electric appliance 26 is powered on (S11), and then software stored in the memory unit 120 may be executed (S12). The second electric appliance 15 is powered on (S13), and then software stored in the second memory unit 230 may be executed (S14).

The software stored in the memory unit 120, particularly the first connection manager stored in the second memory region 123, is executed to transmit a request message for communication access to the second electric appliance 15, that is, the second communication module 200.

In this case, the request message may be transmitted to a plurality of second electric appliances. That is, referring again to FIG. 2, the request message may be transmitted to the plurality of second electric appliances 11, 15, and 17.

When the request message is confirmed as being received, a communication module of each of the plurality of the second electric appliances 11, 15, and 17, particularly the second connection manager stored in the fifth memory region 233 of the second memory unit 230, transmits communication access information, for example communication IP and port information, to the first electric appliance 26 as a response. The first communication module 100 of the first electric appliance 26 may access a communication module that has transmitted the earliest arriving response. FIG. 2 shows that the second electric appliance having transmitted the earliest arriving response is the air conditioner 15 (S16, S17).

When the second electric appliance 15 is accessed by the first electric appliance 26, the operation information of the first electric appliance 26 may be transmitted to the second communication module 200 of the second electric appliance 15 instead of being stored in the first electric appliance 26 due to the limited performance (memory capacity) of the first electric appliance (S18).

The second communication module 200 of the second electric appliance 15, particularly the data manager stored in the fourth memory region 231 of the second memory unit 230, may update or store the operation information of the first electric appliance 26 (S19).

Referring to FIG. 6, while a communication connection is being established between the first and second electric appliances 26 and 15 as described with reference to FIG. 5, an application may be executed by the mobile device 14. It will be appreciated that the application is a program for transceiving information in order to network between the first and second electric appliances 26 and 15 (S31).

Operation information of the first electric appliance 26 may be requested from the second electric appliance 15 through the mobile device 14. As an example, a user may request the operation information by entering a predetermined input.

When the operation information is requested from the second electric appliance 15, the operation information of the first electric appliance 26 stored in the second memory unit 230 of the second electric appliance 15 may be transmitted to the mobile device 14 as a response. That is, the mobile device 14 may request the operation information not from the first electric appliance 26 but from the second electric appliance 15, and may receive the operation information of the first electric appliance 26 previously stored in the second electric appliance 15 as a reply (S33).

The state information or the operation information of the first electric appliance 26 may change while the first electric appliance 26 operates. The first electric appliance 26 may sense the change through the device manager of the memory unit 120, and the sensed operation information may be transmitted to the second memory unit 230 of the second electric appliance 15 in the form of an update message (S35).

Upon receiving the update message, the second electric appliance 15 may transmit an acknowledgement message to the first electric appliance 26 as a response (S36).

The second electric appliance 15 transmits the update message for the changed operation information of the first electric appliance 26 to the mobile device 14 (S37).

The user may use the mobile device 14 to control the operation of the first electric appliance 26. To this end, a control command for the first electric appliance 26 may be transmitted from the mobile device 14 to the second electric appliance 15 (S38).

Upon receiving the control command from the mobile device 14, the second electric appliance 15 transmits a control message to the first electric appliance 26 (S39). The first electric appliance 26 may perform an operation according to the control message and may sense a change in state caused by performing the operation (S40, S41).

The first electric appliance 26 may transmit an update message for the changed state information to the second electric appliance 15 (S42), and the second electric appliance 15 may receive the update message and then transmit an acknowledgement message to the first electric appliance 26 as a response (S43).

The second electric appliance 15 may transmit, to the mobile device 14, a response to a result of performing the control command and the update message of the first electric appliance 26 (S44).

When the user intends to control the first electric appliance 26 using the mobile device 14, the mobile device 14 need not directly communicate with the first electric appliance 26, and may control the first electric appliance 26 through the second electric appliance 15. Accordingly, since the first electric appliance 26 maintains only a communication connection with the second electric appliance 15, the first electric appliance 26 does not need a high-priced resource, for example, the second memory unit 230.

The second embodiment of the present invention will be described below. Since the second embodiment is the same as the first embodiment except for some elements of the network system, differences therebetween will be mainly described, and the description and reference numerals of the first embodiment are applied to the same elements as those of the first embodiment.

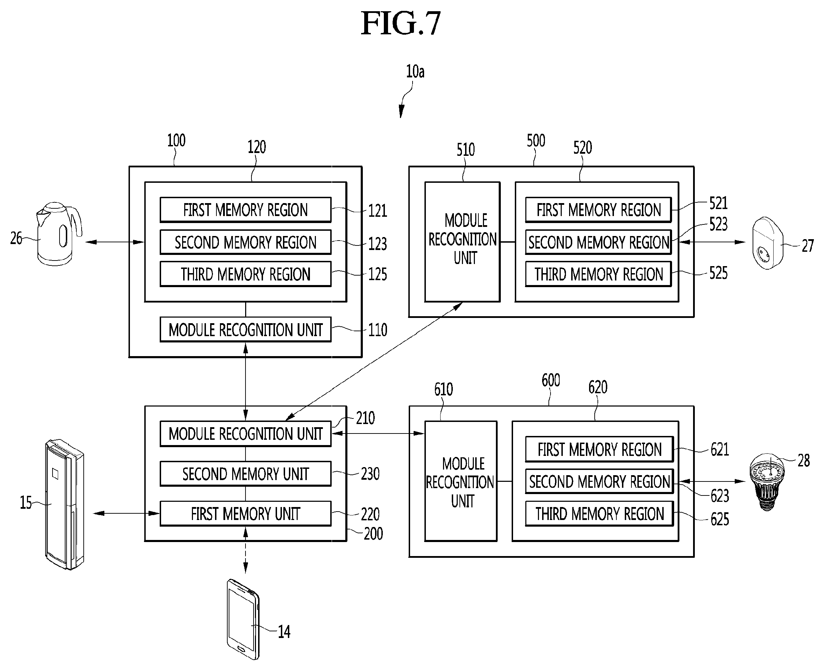

FIG. 7 is a block diagram showing a configuration of a network system according to a second embodiment of the present invention.

Referring to FIG. 7, a network system 10a according to the second embodiment of the present invention includes a second electric appliance 15 with high performance that has a second communication module 200 including a first memory unit 220 and a second memory unit 230 and a plurality of first electric appliances 26, 27, and 28 with relatively low performance.

As an example, the plurality of first electric appliances 26, 27, and 28 may include an electric kettle 26, an outlet device 27, and an illumination device 28, but are not limited thereto.

The electric kettle 26 includes a first communication module 100. The first communication module 100 includes a module recognition unit 110 and a memory unit 120. The memory unit 120 includes a first memory region 121, a second memory region 123, and a third memory region 125. The description of the first embodiment is applied to configurations of the module recognition unit 110 and the memory unit 120.

The outlet device 27 includes a fifth communication module 500. The fifth communication module 500 includes a module recognition unit 510 and a memory unit 520. The memory unit 520 includes a first memory region 521, a second memory region 523, and a third memory region 525. The configurations of the module recognition unit 510 and the memory unit 520 are the same as the module recognition unit 110 and the memory unit 120, and thus the detailed description thereof will be omitted.

The illumination device 28 includes a sixth communication module 600. The sixth communication module 600 includes a module recognition unit 610 and a memory unit 620. The memory unit 620 includes a first memory region 621, a second memory region 623, and a third memory region 625. The configurations of the module recognition unit 610 and the memory unit 620 are the same as the module recognition unit 110 and the memory unit 120, and thus the detailed description thereof will be omitted.

The module recognition unit 210 of the second communication module 200, the module recognition unit 110 of the first communication module 100, the module recognition unit 510 of the fifth communication module 500, and the module recognition unit 610 of the sixth communication module 600 are communicably connected with one another.

Through communication between the module recognition unit 210 of the second electric appliance 15 and the respective module recognition units 110, 510, and 610 of the first electric appliances 26, 27, and 28, the operation information of the first electric appliances 26, 27, and 28 may be stored or updated in the first memory unit 220 or the second memory unit 230 of the second electric appliance 15.

When the user intends to monitor the operation information of the first electric appliances 26, 27, and 28 and control the first electric appliances 26, 27, and 28 through the mobile device 14, the mobile device 14 may access and communicate with the second communication module 200 of the second electric appliance 15 and may request the operation information of the first electric appliances 26, 27, and 28 or transmit a control command through the second communication module 200.

When the plurality of first electric appliances maintains a communication connection with the second electric appliance, the plurality of first electric appliances may easily respond to a request by an external device such as the mobile device even though the plurality of first electric appliances are not connected in communication with the external device.

According to the embodiments, it is possible to use a second electric appliance with high performance to monitor the operation information of the first electric appliance with low performance and control the operation of a first electric appliance.

In particular, it is also possible to enhance convenience of use in a home network since the operation information of the first electric appliance can be stored in the memory unit installed in the second electric appliance, and the user can use the mobile device to connect to the second electric appliance without connecting to the first electric appliance when the user intends to confirm the operation state of the first electric appliance.

It is also possible to incorporate a plurality of small home appliances into a home network since a plurality of electric appliances are communicably connected to one second electric appliance and operation information of the plurality of electric appliances can be stored in a memory unit of the second electric appliance.

Any reference in this specification to "one embodiment," "an embodiment," "example embodiment," etc., means that a particular feature, structure, or characteristic described in connection with the embodiment is included in at least one embodiment. The appearances of such phrases in various places in the specification are not necessarily all referring to the same embodiment. Further, when a particular feature, structure, or characteristic is described in connection with any embodiment, it is submitted that it is within the purview of one skilled in the art to affect such a feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A network system comprising:
a first electric appliance (26, 27, 28) having a memory unit (120, 520, 620); and
a second electric appliance (11, 12, 13, 14, 15, 16, 17) configured to communicate with the first electric appliance,
wherein the second electric appliance comprises:
a first memory unit (220) in which software for monitoring an operation of the second electric appliance is stored; and
a second memory unit (230) in which software for managing operation information of the first electric appliance delivered from the first electric appliance is installed.

2. The network system of claim 1, wherein, when the first electric appliance (26, 27, 28) and the second electric appliance (11, 12, 13, 14, 15, 16, 17) are communicably connected to each other, the operation information of the first electric appliance is restricted from being stored in the memory unit (120, 520, 620) and is stored in the second memory unit (230).

3. The network system of claim 1 or 2, wherein the memory unit (120, 520, 620) of the first electric appliance (26, 27, 28) comprises:
a first memory region (121, 521, 621) in which software for controlling an operation of the first electric appliance and monitoring a state of the operation is stored;
a second memory region (123, 523, 623) in which software for performing a networking function of accessing the second electric appliance is stored; and
a third memory region (125, 525, 625) in which software for performing a function of delivering the operation information of the first electric appliance to the second electric appliance is stored.

4. The network system of any one of the claims 1 to 3, wherein the first memory unit (220) comprises:
a first memory region (221) in which software for controlling an operation of the second electric appliance and monitoring a state of the operation is stored;
a second memory region (223) in which software for performing a networking function of accessing the second memory unit is stored; and
a third memory region (225) in which software for performing a function of delivering operation information of the second electric appliance to the second memory unit is stored.

5. The network system of any one of the claims 1 to 4, wherein the second memory unit (230) comprises:
a fourth memory region (231) in which software for storing or managing data delivered from the memory unit (120, 520, 620) of the first electric appliance or the first memory unit (220) is stored;
a fifth memory region (233) in which software for performing a communication connection with the memory unit (120, 520, 620) of the first electric appliance or the first memory unit (220) is stored; and
a sixth memory region (235) in which software for setting a route for delivering a message between the memory unit (120, 520, 620) of the first electric appliance and the first memory unit (220) is stored.

6. The network system of any one of the claims 1 to 5, wherein,
the second electric appliance is provided in a plurality,
the plurality of second electric appliances performs machine-to-machine (M2M) communication, and
the plurality of second electric appliances form an arrangement of mesh topology in which the plurality of second electric appliances are individually and communicably connected.

7. The network system of claim 6, wherein the second memory unit (230) comprises a seventh memory region (237) in which software for performing a function of processing protocol messages for communication with the plurality of second electric appliances is stored.

8. The network system of any one of the claims 1 to 7, further comprising a mobile device (14) configured to monitor the operation information of the first electric appliance (26, 27, 28) or transmit a control command for operating the first electric appliance (26, 27, 28).

9. The network system of claim 8, wherein,
the control command of the mobile device (14) is transmitted (S38) to the second electric appliance (11, 12, 13, 15, 16, 17), and
the second electric appliance transmits (S39) a message corresponding to the control command to the first electric appliance (26, 27, 28).

10. The network system of claim 9, wherein,
the first electric appliance (26, 27, 28) performs (S40) an operation corresponding to the message, senses (S41) a change in state caused by performing the operation, and transmits (S42) an update message for the changed state information to the second electric appliance, and
the second electric appliance transmits (S44), to the mobile device (14), a response to a result of performing the control command and the update message of the first electric appliance.

11. The network system of claim 8, wherein,
the mobile device (14) requests (S32) the operation information of the first electric appliance (26, 27, 28) from the second electric appliance (11, 12, 13, 15, 16, 17), and
the second electric appliance transmits (S33) the operation information of the first electric appliance stored in the second memory unit (230) of the second electric appliance to the mobile terminal (14) as a response.

12. The network system of any one of the claims 1 to 11, wherein,
the first electric appliance (26, 27, 28) is provided in a plurality, and
the plurality of first electric appliances are communicably connected to a communication module (200) of the second electric appliance.

13. The network system of any one of the claims 1 to 12, wherein the first electric appliance includes an electric kettle, an outlet device, an illustration device, a hair dryer, or a mixer, and
wherein the second electric appliance includes a washing machine, a refrigerator, an air conditioner, a cooking device, a television, or a robot vacuum cleaner.

14. A control method of a network system, the control method comprising:
communicably connecting a first electric appliance (26, 27, 28) having a memory unit (120, 520, 620) with a second electric appliance (11, 12, 13, 14, 15, 16, 17) having a first memory unit (220) and a second memory unit (230);
transmitting (S32) a message for requesting state information of the first electric appliance or (S38) a control command of the first electric appliance from a mobile device (14) while the first and second electric appliances are communicably connected; and
transmitting (S33) a state information response message of the first electric appliance or (S44) a control result message of the first electric appliance from the second electric appliance to the mobile device (14).

15. The control method of claim 14, wherein,
the second electric appliance is provided in a plurality, and
the communicably connecting of the first and second electric appliances comprises:
transmitting (S15) a communication access request message from the first electric appliance to the plurality of second electric appliances;
transmitting (S16) response messages including communication access information from the plurality of second electric appliances; and
communicably connecting (S17) the first electric appliance with a second electric appliance that transmits (S16) an earliest arriving response message.
